# EUROPÄISCHE PATENTSCHRIFT

(11) **EP 1 185 032 B1**
(45) Veröffentlichungstag und Bekanntmachung des Hinweises auf die Patenterteilung: **14.12.2005**
(21) Anmeldenummer: 01440266.3
(22) Anmeldetag: 17.08.2001
(51) Int. Cl.: H04L 12/28, H04L 12/56

(54) **Verfahren zum Übertragen eines Datenpakets**
Method for data packet transmission
Méthode de transmission des paquets de données

(30) Priorität: 05.09.2000 DE 10043658
(43) Veröffentlichungstag der Anmeldung: 06.03.2002
(73) Patentinhaber: ALCATEL, 75008 Paris (FR)
(72) Erfinder: Wahl, Stefan, 71701 Schieberdingen (DE); Seibold, Wolfram, 73630 Remshalden (DE)
(74) Vertreter: Menzietti, Domenico

(56) Entgegenhaltungen:
- US-A- 5 894 472
- QUIGLEY T J: "Cablemodem standards for advanced quality of service deployments" CONSUMER ELECTRONICS, 1999. ICCE. INTERNATIONAL CONFERENCE ON LOS ANGELES, CA, USA 22-24 JUNE 1999, PISCATAWAY, NJ, USA,IEEE, US, 22. Juni 1999 (1999-06-22), Seiten 282-283, XP010346563 ISBN: 0-7803-5123-1
- HO W W ET AL: "A multiple-partition token ring network" MULTIPLE FACETS OF INTEGRATION. SAN FRANCISCO, JUNE 3 - 7, 1990, PROCEEDINGS OF THE ANNUAL JOINT CONFERENCE OF THE COMPUTER AND COMMUNICATIONS SOCIETIES (INFOCOM), WASHINGTON, IEEE COMP. SOC. PRESS, US, Bd. 2 CONF. 9, 3. Juni 1990 (1990-06-03), Seiten 982-988, XP010019485 ISBN: 0-8186-2049-8
- GLEN SLATER MOTOROLA INC.: "Media Access Control Protocol Based on DOCSIS 1.1" IEEE 802.16 BROADBAND WIRELESS ACCESS WORKING GROUP, 29. Oktober 1999 (1999-10-29), Seiten 0-12, XP002248637
- MUKHERJEE B ET AL: "Partitioning a token ring network for performance advantage" LOCAL COMPUTER NETWORKS, 1988., PROCEEDINGS OF THE 13TH CONFERENCE ON MINNEAPOLIS, MN, USA 10-12 OCT. 1988, WASHINGTON, DC, USA,IEEE COMPUT. SOC. PR, US, 10. Oktober 1988 (1988-10-10), Seiten 386-394, XP010014504 ISBN: 0-8186-0891-9

## Beschreibung

Die Erfindung betrifft ein Verfahren zum Übertragen eines Datenpakets von einer ersten Sende-/Empfangseinrichtung zu einer zweiten Sende-/Empfangseinrichtung.

Datenpakete werden z.B. in Vielfachzugriffssystemen übertragen. Ein Vielfachzugriffssystem ist z.B. als Punkt-zu-Mehrpunkt-System ausgebildet, z.B. als HFC-System, als HFR-System, als LMDS-System, als UMTS-System oder als HyperLAN-System; HFC=Hybrid Fibre Coax, HFR=Hybrid Fibre Radio, LMDS=Local Multipoint Distribution System, UMTS=Universal Mobile Telecommunications System.

Insbesondere verzögerungssensitive, niederbandbreitige Dienste generieren in Vielfachsystemen auf der Strecke von den Endstellen zur Zentrale nur geringe Bandbreiten. Solche Dienste sind z.B. VolP, Abrufsignals für Webpages, Abrufsignals für SoD oder dergleichen; VolP=Voice over Internet Protocol=Telefonie übers Internet, SoD=Service on demand=Dienste, wie Videos, Lernprogramme, Musik auf Abruf. Die benötigten Bandbreiten für die Inanspruchnahme eines Dienstes liegen deutlich unter 64 kbit/s. Gleichzeitig werden aber hohe Anforderungen an den maximalen Delayjitter gestellt, z.B. in der Größenordnung von 1 bis 4 ms.

Vor jedem Aussenden von Datenpaketen von den Endstellen zur Zentrale werden Sendeberechtigungen, z.B. Zuweisungen von Zeitschlitzen, Zeitintervallen, Kodes, Frequenz-Kanälen oder beliebigen Kombinationen daraus, von der Zentrale zu den Endstellen übertragen. Erst nach Erhalt einer Sendeberechtigung darf eine Endstelle ein Datenpaket senden. Das Zugriffsverfahren für die Endstellen ist beispielsweise TDMA, CDMA, FDMA oder eine beliebige Kombination daraus, z.B. TFDMA; TDMA = Time Division Multiple Access, CDMA = Code Division Multiple Access, FDMA = Frequency Division Multiple Access, TFDMA = Time and Frequency Division Multiple Access.

Werden zu einer Endstelle nun Sendeberechtigungen mit einer niedrigen Rate übertragen, z.B. einer Rate, die dem Verkehrsaufkommen einer VolP-Applikation entspricht, so sind die Zeitabstände zwischen den einzelnen Sendeberechtigungen und der resultierende Delayjitter sehr groß. Der Delayjitter ist z.B. größer als 10 ms und liegt damit über dem maximal Erlaubten.

Zur Erfüllung der Delayjitteranforderung wird die Rate der Sendeberechtigungen für jede Endstelle erhöht. Die erhöhte Sendeberechtigungsrate führt aber unweigerlich zu einer Bereitstellung von Bandbreite, die die Bandbreite des erwarteten Verkehrsaufkommens weit übersteigt. Ein Großteil der zur Verfügung gestellten Bandbreite bleibt auf diese Art und Weise ungenutzt und wird damit verschwendet. Gerade in Funksystemen, in denen wenig Bandbreite zur Verfügung steht, wirkt sich dies nachteilig aus, z.B. wird dadurch die Anzahl der Funkstationen einer Zelle, die gleichzeitig Datenpakete übertragen wollen, deutlich limitiert.

Aus Glen Slater Motorola Inc.: "Media Access Control Protocol Based on Docsis 1.1" IEEE 802.16 Broadband Wireless Access Working Group, 29. Oktober 1999 (1999-10-29), Seiten 0-12, XP002248637 ist ein Verfahren zum Übertragen von Datenpaketen von einer ersten Sende-/Empfangseinrichtung zu einer zweiten Sende-/Empfangseinrichtung und von einer dritten zur zweiten Sende-/Empfangseinrichtung bekannt. Das Verfahren beinhaltet folgende Schritte: Senden mit hoher Sendeberechtigungsrate von mindestens zwei Sendeberechtigungen von der zweiten Sende-/Empfangseinrichtung zur ersten Sende-/Empfangseinrichtung, wobei die Zeitabstände zwischen den mindestens zwei Sendeberechtigungen vorgegebenen Delayjitteranforderungen genügen, und Senden eines ersten Datenpakets von der ersten Sende-/Empfangseinrichtung zur zweiten Sende-/Empfangseinrichtung nach Empfang der mindestens zwei Sendeberechtigungen, wobei die Aussendung zu einem aus den mindestens zwei empfangenen Sendeberechtigungen abgeleiteten Zeitpunkt erfolgt.

Aufgabe der Erfindung ist es, ein Verfahren zum Übertragen eines Datenpakets bereitzustellen, das die Delayjitteranforderungen erfüllt und gleichzeitig hinsichtlich der Bandbreiteausnutzung optimiert ist.

Gelöst wird diese Aufgabe durch ein Verfahren nach Anspruch 1.

Beim erfindungsgemäßen Verfahren werden Sendeberechtigungen mit einer hohen Rate übertragen, um die Anforderungen hinsichtlich des Delayjitters zu erfüllen. Die Sendeberechtigungen werden aber nur solange wie nötig übertragen. Nach Empfang eines Datenpakets einer Endstelle wird die Aussendung weiterer Sendeberechtigungen für die gleiche Endstelle ausgesetzt. Erst nach einer bestimmten Zeitspanne, d.h. kurz vor dem erwarteten Aussenden eines Datenpakets dergleichen Endstelle werden erneut Sendeberechtigungen zu dieser Endstelle mit einer hohen Datenrate übersandt. Es wechseln sich somit kurze Zeitspannen, in denen Sendeberechtigungen mit einer hohen Rate zu einer Endstelle übertragen werden, mit langen Zeitspannen ab, in denen keine Sendeberechtigungen zu dieser Endstelle übertragen werden. In den langen Zeitspannen können z.B. Sendeberechtigungen nacheinander jeweils in kurzen Zeitspannen zu einer, zwei oder mehr weiteren Endstellen übertragen werden.

Das erfindungsgemäße Verfahren kann somit als ein Verfahren zum Übertragen eines Datenpakets von einer ersten Sende-/Empfangseinrichtung zu einer zweiten Sende-/Empfangseinrichtung nach Anspruch 1 bezeichnet werden.

Die erste Sende-/Empfangseinrichtung ist beispielsweise als Endstelle, Cable Modem oder Funkstation eines Vielfachzugriffsystems ausgebildet. Die zweite Sende-/Empfangseinrichtung ist beispielsweise als Zentrale, Head End oder Hub eines HFC- oder HFR-Systems, als Zentrale eines HyperLAN-Systems oder als Basisstation eines LMDS- oder UMTS-Systems ausgebildet. Das Vielfachzugriffssystem ist beispielsweise ein Punkt-zu-Mehrpunkt-System mit einer Zentrale und einer Vielzahl von Endstellen. Die zweite Sende-/Empfangseinrichtung bildet die Zentrale, die erste Sende-/Empfangseinrichtung eine Endstelle. Das Zugriffsverfahren für die Endstellen auf den Übertragungskanal zur Zentrale wird zentral gesteuert. Die Zentrale vergibt Sendeberechtigungen im TDMA-Fall durch Zuweisung von Zeitschlitzen, in denen eine bestimmte Endstelle sendeberechtigt ist. Durch die zentrale Zuweisung werden Kollisionen verhindert. Die Sendeberechtigungen und die von den Endstellen ausgesandten Datenpakete sind nicht aufeinander synchronisiert. Die Datenpakete der Endstellen haben eine geringe Datenrate und bei ihrer Übertragung tritt eine gewisse Verzögerung, das sogenannte delay, auf, das für unterschiedliche Endstellen unterschiedlich ist aufgrund der unterschiedlichen Distanzen der Endstellen zur Zentrale. Zur Erfüllung von Delayjitteranforderungen werden die Sendeberechtigungen mit einer hohen Rate übertragen. Erst nach dem Empfang von mindestens zwei Sendeberechtigungen kann jede Endstelle eine gesteuerte Aussendung eines Datenpakets derart vornehmen, dass die Delayjitteranforderung erfüllt wird. Jede Endstelle leitet aus den empfangenen Sendeberechtigungen die für die gezielte Aussendung eines Datenpakets zu einem bestimmten Zeitpunkt nötigen Informationen ab. Wenn nun ein Datenpaket einer Endstelle bei der Zentrale eingetroffen ist, so ist aufgrund der Tatsache, dass jede Endstelle nur eine geringe Datenrate zur Aussendung von Datenpaketen verwendet sichergestellt, dass in einer gewissen Zeitspanne keine weiteren Datenpakete von den gleichen Endstelle zu erwarten sind. Die Aussendung von Sendeberechtigungen für diese Endstelle wird demnach ausgesetzt, sobald ein Datenpaket von der Endstelle empfangen wurde.

Erst wenn nach einer gewissen Zeitspanne, die sich aus der Datenrate einer Endstelle bestimmen lässt, ein weiteres Datenpaket erwartet wird, wird die Aussendung von Sendeberechtigungen für diese Endstelle fortgesetzt. So werden mindestens zwei Sendeberechtigungen von der zweiten Sende-/Empfangseinrichtung, also der Zentrale zur ersten Sende-/Empfangseinrichtung, d.h. einer Endstelle gesendet, wenn ein weiteres Datenpaket von dieser Endstelle erwartet wird. Ferner wird die Übertragung der Sendeberechtigungen von der zweiten Sende-/Empfangseinrichtung zur ersten Sende-/Empfangseinrichtung wieder ausgesetzt wird, sobald die zweite Sende-/Empfangseinrichtung das weitere Datenpaket empfangen hat.

Der Vorgang des Aussendens von Sendeberechtigungen und des Aussetzens der Sendeberechtigungen wird solange fortgesetzt wie die Verbindung zwischen Zentrale und Endstelle besteht. Hat sich eine Endstelle z.B. ins Internet eingewählt, so wird obiger Vorgang bis zum Ende der Internet Session fortgesetzt.

Aufgrund des Aussetzens der Sendeberechtigungen werden Zeitspannen generiert, die für zusätzliche Zwecke genutzt werden können. Die Bandbreite, die zwischen dem Aussenden von Datenpaketen einer Endstelle zur Verfügung steht, kann von anderen Endstellen zur Überragung von Datenpaketen genutzt werden. Nach dem Aussetzen der Übertragung von Sendeberechtigungen von der zweiten Sende-/Empfangseinrichtung, also der Zentrale, zur ersten Sende-/Empfangseinrichtung, d.h. einer ersten Endstelle, werden vorteilhafterweise mindestens zwei Sendeberechtigungen von der zweiten Sende-/Empfangseinrichtung zu einer dritten Sende-/Empfangseinrichtung, d.h. einer zweiten Endstelle, ausgesendet. Die Aussendung der Sendeberechtigungen von der zweiten Sende-/Empfangseinrichtung zur dritten Sende-/Empfangseinrichtung wird ausgesetzt, sobald ein Datenpaket von der dritten Sende-/Empfangseinrichtung in der zweiten Sende-/Empfangseinrichtung empfangen wurde. Auf diese Art und Weise kann ein Übertragungskanal einer bestimmten Bandbreite von zwei Endstellen gleichzeitig genutzt werden. Die Endstellen senden dazu zeitversetzt, gesteuert durch die Zentrale. In Abhängigkeit von der zur Verfügung stehenden Bandbreite eines Übertragungskanals und der Datenrate der Endstellen lässt sich obiges Verfahren auf drei, vier und mehr Endstellen ausweiten, so dass dann gleichzeitig drei, vier und mehr Endstellen den gleichen Übertragungskanal zeitversetzt, gesteuert durch die Zentrale nutzen können.

Allgemein kann daher von einem Verfahren zum Senden von Sendeberechtigungen von einer ersten Sende-/Empfangseinrichtung, z.B. einer Zentrale, zu einer zweiten Sende-/Empfangseinrichtung, z.B. einer Endstelle, gesprochen werden, bei dem die Sendeberechtigungen in einer ersten Zeitspanne zur zweiten Sende-/Empfangseinrichtung ausgesandt werden und bei dem die erste Zeitspanne kleiner ist als eine sich an die erste Zeitspanne anschließende zweite Zeitspanne, in der keine Sendeberechtigungen zur zweiten Sende-/Empfangseinrichtung ausgesandt werden. Die Zeitabstände zwischen zwei Sendeberechtigungen erfüllen dabei vorteilhafterweise vorgegebenen Delayjitteranforderungen. Zumindest in einem Zeitschlitz der zweiten Zeitspanne können Sendeberechtigungen zu einer dritten, vierten, fünften Sende-/Empfangseinrichtung ausgesandt werden.

Die erfindungsgemäße Zentrale des Vielfachzugriffsystems beinhaltet eine Steuerung, z.B. einen Zugriffssteuerungs-Controller, einen MAC-Controller, MAC=Medium Access Control, einen Prozessor, eine CPU, ein Softwareprogramm auf einer Recheneinheit oder dergleichen, zum gesteuerten Aussenden von Sendeberechtigungen zu Sende-/Empfangseinrichtungen, z.B. Endstellen. Die Steuerung ist geeignet, einer Sende-/Empfangseinrichtung mindestens zwei Sendeberechtigungen zuzusenden und die Aussendung der Sendeberechtigungen zur einen Sende-/Empfangseinrichtung auszusetzen sobald die Zentrale ein Datenpaket der einen Sende-/Empfangseinrichtung empfangen hat. Die Zentrale ist z.B. als Head End oder Hub eines HFC- oder HFR-Systems, als Zentrale eines HyperLAN-Systems oder als Basisstation eines LMDS- oder UMTS-Systems ausgebildet. Die Sende-/Empfangseinrichtungen sind jeweils als Cable Modem bzw. Funkstation ausgebildet.

Im folgenden wird die Erfindung anhand eines Ausführungsbeispiels erläutert.

Bei einer VolP-Applikation generiert eine Endstelle z.B. eine Datenrate von 10 kbit/s. Es werden somit Datenpakete, die Sprachinformationen beinhalten mit einer Datenrate von 10 kbit/s ausgesandt. Die Zentrale des Vielfachzugriffsystems hat dazu eine Sendeberechtigungsrate von etwa einer Sendeberechtigung alle 40 ms zur Verfügung zu stellen. Das Delayjitter soll z.B. nicht größer sein als 4 ms. Daraus würde sich im Vielfachzugrifsystem eine Datenrate von 106 kbit/s für die VolP-Applikation ergeben. Aufgrund der Tatsache, dass die VolP-Applikation nur 10 kbit/s benötigt, blieben demnach 96 kbit/s der 106 kbit/s ungenutzt. Erfindungsgemäß wird aber die Aussendung der Sendeberechtigungen nach dem Empfang eines Datenpakets für die entsprechende Endstelle ausgesetzt. Kommen die VolP-Datenpakete z.B. mit einer Ungenauigkeit von +/- 4 ms in der Zentrale an, so können etwa 7 von 9 Sendeberechtigungen ausgesetzt werden. Die 7 potentiellen Sendeberechtigungen können für ein, zwei oder drei weitere VolP-Applikationen verwendet werden. Die zur Verfügung gestellte Bandbreite eines Übertragungskanals wird somit im Ausführungsbeispiel gleichzeitig von bis zu vier Endstellen für vier VolP-Applikationen genutzt. Dies entspricht einer Vervierfachung gegenüber dem Stand der Technik.

Die Generierung von Sendeberechtigungen oder Sendeerlaubnissen erfolgt somit mit hoher Rate zur Erfüllung der Delayjitteranforderungen. Gleichzeitig werden die Sendeberechtigungen nur in den Zeitintervallen zu einer bestimmten Endstelle ausgesandt, in denen Datenpakete von dieser Endstelle erwartet werden. Sobald ein Datenpaket einer bestimmten Endstelle in der Zentrale empfangen wurde wird die Aussendung der Sendeberechtigungen zu dieser Endstelle ausgesetzt. Die Erfindung besteht somit in einer intelligenten Steuerung der Sendeberechtigungen, die mit einer hohen Rate generiert werden, um die Delayjitteronforderungen zu erfüllen. Durch dynamische Zuteilung von ausgesetzten Sendeberechtigungen einer Endstelle zu anderen Endstellen wird die Bandbreitenausnutzung optimiert.

## Patentansprüche

1. Verfahren zum Übertragen von Datenpaketen von einer ersten Sende-/Empfangseinrichtung zu einer zweiten Sende-/Empfangseinrichtung und von einer dritten zur zweiten Sende-/Empfangseinrichtung, beinhaltend folgende Schritte:
a) Senden mit hoher Sendeberechtigungsrate von mindestens zwei Sendeberechtigungen von der zweiten Sende-/Empfangseinrichtung zur ersten Sende-/Empfangseinrichtung, wobei die Zeitabstände zwischen den mindestens zwei Sendeberechtigungen vorgegebenen Delayjitteranforderungen genügen,
b) Senden eines ersten Datenpakets von der ersten Sende-/Empfangseinrichtung zur zweiten Sende-/Empfangseinrichtung nach Empfang der mindestens zwei Sendeberechtigungen, wobei die Aussendung zu einem aus den mindestens zwei empfangenen Sendeberechtigungen abgeleiteten Zeitpunkt erfolgt,
**dadurch gekennzeichnet, dass** die Aussendung mit einer geringen Datenrate erfolgt, wobei die geringe Datenrate geringer als die hohe Sendeberechtigungsrate ist, und dass das Verfahren folgende weitere Schritte beinhaltet:
c) Aussetzen der Übertragung von Sendeberechtigungen von der zweiten Sende-/Empfangseinrichtung zur ersten Sende-/Empfangseinrichtung nach Empfang des ersten Datenpakets, und
d) nach dem Aussetzen der Übertragung und vor einem erneuten Aussenden von mindestens zwei Sendeberechtigungen von der zweiten Sende-/Empfangseinrichtung zur ersten Sende-/Empfangseinrichtung Senden von mindestens zwei Sendeberechtigungen von der zweiten Sende-/Empfangseinrichtung zu einer dritten Sende-/Empfangseinrichtung, wobei die Aussendung der Sendeberechtigungen von der zweiten Sende-/Empfangseinrichtung zur dritten Sende-/Empfangseinrichtung ausgesetzt wird, sobald ein zweites Datenpaket von der dritten Sende-/Empfangseinrichtung in der zweiten Sende-/Empfangseinrichtung empfangen wurde.

2. Verfahren noch Anspruch 1, **dadurch gekennzeichnet, dass** mindestens zwei weitere Sendeberechtigungen von der zweiten Sende-/Empfangseinrichtung zur ersten Sende-/Empfangseinrichtung gesendet werden, wenn ein weiteres Datenpaket erwartet wird, und dass die Übertragung der Sendeberechtigungen von der zweiten Sende-/Empfangseinrichtung zur ersten Sende/Empfangseinrichtung wieder ausgesetzt wird, sobald die zweite Sende-/Empfangseinrichtung das weitere Datenpaket empfangen hat.

3. Erste Sende-/Empfangseinrichtung zur Übertragung von Datenpaketen zu einer zweiten Sende-/Empfangseinrichtung, beinhaltend Mittel, die derart ausgestaltet sind, mindestens zwei, von der zweiten Sende-/Empfangseinrichtung mit hoher Sendeberechtigungsrate ausgesendete Sendeberechtigungen zu empfangen, wobei die Zeitabstände zwischen den mindestens zwei Sendeberechtigungen vorgegebenen Delayjitteranforderungen genügen, und
nach Empfang der mindestens zwei Sendeberechtigungen ein erstes Datenpaket zur zweiten Sende-/Empfangseinrichtung zu senden, wobei die Aussendung zu einem aus den mindestens zwei empfangenen Sendeberechtigungen abgeleiteten Zeitpunkt erfolgt,
**dadurch gekennzeichnet, dass** die Mittel ferner derart ausgestaltet sind, die Aussendung mit einer geringen Datenrate durchzuführen, wobei die geringe Datenrate geringer als die hohe Sendeberechtigungsrate ist.

4. Zweite Sende-/Empfangseinrichtung zur Übertragung von Sendeberechtigungen zu einer ersten und einer dritten Sende-/Empfangseinrichtung und zum Empfang von Datenpaketen von der ersten und der dritten Sende-/Empfangseinrichtung, beinhaltend Mittel, die derart ausgestaltet sind,
a) mindestens zwei Sendeberechtigungen mit hoher Sendeberechtigungsrate zur ersten Sende-/Empfangseinrichtung zu senden, wobei die Zeitabstände zwischen den mindestens zwei Sendeberechtigungen vorgegebenen Delayjitteranforderungen genügen,
b) ein erstes Datenpakets von der ersten Sende-/Empfangseinrichtung zu empfangen,
**dadurch gekennzeichnet, dass** die Datenrate des ersten Datenpakets geringer als die hohe Sendeberechtigungsrate ist, und dass die Mittel ferner derart ausgestaltet sind:
c) die Übertragung von Sendeberechtigungen zur ersten Sende-/Empfangseinrichtung nach Empfang des ersten Datenpakets auszusetzen, und
d) nach dem Aussetzen der Übertragung und vor einem erneuten Aussenden von mindestens zwei Sendeberechtigungen zur ersten Sende-/Empfangseinrichtung mindestens zwei Sendeberechtigungen zur dritten Sende-/Empfangseinrichtung zu senden, wobei die Aussendung der Sendeberechtigungen zur dritten Sende/Empfangseinrichtungausgesetzt wird, sobald ein zweites Datenpaket von der dritten Sende/Empfangseinrichtung in der zweiten Sende-/Empfangseinrichtung empfangen wurde.

5. Zweite Sende-/Empfangseinrichtung nach Anspruch 4, **dadurch gekennzeichnet, dass** sie als Zentrale für ein Vielfachzugriffsystem ausgebildet ist, welche als Head End oder Hub eines HFC- oder HFR-Systems, als Zentrale eines HyperLAN-Systems oder als Basisstation eines LMDS- oder UMTS-Systems ausgebildet ist und die erste und dritte Sende-/Empfangseinrichtungen jeweils als Cable Modem bzw. Funkstation ausgebildet sind.

## Claims

1. Method of transmitting data packets from a first transceiver to a second transceiver and from a third to the second transceiver, including the following steps:
a) Sending of at least two send authorizations at a high send authorization rate from the second transceiver to the first transceiver, the time intervals between the at least two send authorizations satisfying preset delay jitter requirements,
b) Sending of a first data packet from the first transceiver to the second transceiver after receipt of the at least two send authorizations, the transmission taking place at a time derived from the at least two received send authorizations,
**characterized in that** the transmission taken place at a low data rate, the low data rate being lower than the high send authorization rate, and that the method includes the following further steps:
c) Suspension of transmission of send authorizations from the second transceiver to the first transceiver after receipt of the first data packet, and
d) after the suspension of transmission and before a renewed emission of at least two send authorizations from the second transceiver to the first transceiver, sending of at least Lwo send authorizations from the second transceiver to a third transceiver, the transmission of the send authorizations from the second transceiver to the third transceiver being suspended as soon as a second data packet has been received from the third transceiver in the second transceiver.

2. Method according to Claim 1, **characterized in that** at least two further send authorizations are sent from the second transceiver to the first transceiver when a further data packet is expected, and that the transmission of the send authorizations from the second transceiver to the first transceiver is again suspended as soon as the second transceiver has received the further data packet.

3. First transceiver for transmission of data packets to a second transceiver, containing means that are designed in such a way as to receive at least two send authorizations sent at a high send authorization rate by the second transceiver, the time intervals between the at least two send authorizations satisfying preset delay jitter requirements, and
after receipt of the at least, two send authorizations, to send a first data packet to the second transceiver, the transmission taking place at a time derived from the at least two received send authorizations,
**characterized in that** the means are further designed in such a way as to execute the transmission at a low data rate, the low data rate being lower than the high send authorization rate.

4. Second transceiver for transmission of send authorizations to a first and a third transceiver and for receipt of data packets from the first and the third transceiver, containing means that are designed in such a way as to
a) send at least two send authorizations at a high send authorization rate to the first transceiver, the time intervals between the at least two send authorisations satisfying preset delay jitter requirements,
b) receive a first data packet from the first transceiver,
**characterized in that** the data rate of the first data packet is lower than the high send authorization rate, and that the means are further designed in such a way as to:
c) suspend the transmission of send authorisations to the first transceiver after receipt of the first data packet, and
d) after the suspension of transmission and before a renewed transmission of at least two send authorizations to the first transceiver, to send at least two send authorisations to the third transceiver, the transmission of the send authorizations to the third transceiver being suspended as soon as a second data packet has been received from the third transceiver in the second transceiver.

5. Second transceiver according to Claim 4, **characterized in that** it is configured as a central station for a multiple access system, the central station being developed as a head end or hub nf an HFC or HFR system, as a central station of a HyperLAN system or as a base station of an LMDS or UMTS system, and the first and third transceivers each being developed as a cable modem or radio station.

## Revendications

1. Procédé de transmission de paquets de données d'un premier appareil émetteur/récepteur à un deuxième appareil émetteur/récepteur et d'un troisième à un deuxième appareil émetteur/récepteur, comprenant les étapes suivantes :
a) envoi à une vitesse d'autorisation élevée d'au moins deux autorisations de transmission du deuxième appareil émetteur/récepteur au premier appareil émetteur/récepteur, les intervalles de temps entre les au moins deux autorisations de transmission étant en rapport avec les exigences prescrites en matière de gigue de retard,
b) envoi d'un premier paquet de données du premier appareil émetteur/récepteur au deuxième appareil émetteur/récepteur après réception des au moins deux autorisations de transmission, l'émission ayant lieu à un moment dérivé des au moins deux autorisations de transmission reçues,
**caractérisé en ce que** l'émission a lieu à un faible débit, le faible débit étant inférieur à la vitesse d'autorisation de transmission élevée, et **en ce que** le procédé comprend d'autres étapes suivantes de :
c) suspension de la transmission des autorisations de transmission du deuxième appareil émetteur/récepteur au premier appareil émetteur/récepteur après la réception du premier paquet de données, et
d) émission d'au moins deux autorisations de transmission du deuxième appareil émetteur/récepteur vers le troisième appareil émetteur/récepteur après la suspension de la transmission et avant une nouvelle émission d'au moins deux autorisations de transmission du deuxième appareil émetteur/récepteur vers le premier appareil émetteur/récepteur, l'émission des autorisations, de transmission du deuxième appareil émetteur/récepteur vers le troisième appareil émetteur/récepteur étant suspendue aussitôt qu'un second paquet de données a été reçu du troisième appareil émetteur/récepteur dans le deuxième appareil émetteur/récepteur.

2. Procédé selon la revendication 1, **caractérisé en ce qu'**au moins deux autres autorisations de transmission sont émises du deuxième appareil émetteur/récepteur vers le premier appareil émetteur/récepteur, si un autre paquet de données est attendu, et **en ce que** la transmission des autorisations de transmission du deuxième appareil émetteur/récepteur au premier appareil émetteur/récepteur est de nouveau suspendue, aussitôt que le deuxième appareil émetteur/récepteur a reçu l'autre paquet de données.

3. Premier appareil émetteur/récepteur de transmission de paquets de données à un deuxième appareil émetteur/récepteur, comprenant des moyens formés de manière à recevoir au moins deux autorisations de transmission émises du deuxième appareil émetteur/récepteur à une vitesse d'autorisation de transmission élevée, dans lequel les intervalles de temps entre les au moins deux autorisations de transmission sont en rapport avec les exigences prescrites en matière de gigue de retard, et
après la réception des au moins deux autorisations de transmission pour transmettre un premier paquet de données au deuxième appareil émetteur/récepteur, l'émission ayant lieu à un moment dérivé des au moins deux autorisations de transmission reçues,
**caractérisé en ce que** les moyens sont, en outre, formés de manière à réaliser l'émission à un débit plus faible, le débit plus faible étant plus faible que la vitesse d'autorisation de transmission élevée.

4. Deuxième appareil émetteur/récepteur de transmission des autorisations de transmission à un premier et un troisième appareil émetteur/récepteur et de réception de paquets de données du premier et du troisième appareil émetteur/récepteur, comprenant des moyens formés de manière à,
a) envoyer au moins deux autorisations de transmission à une vitesse d'autorisation de transmission élevée au premier appareil émetteur/récepteur, les intervalles de temps entre les au moins deux autorisations de transmission étant en rapport avec les exigences prescrites en matière de gigue de retard,
b) recevoir un premier paquet de données du premier appareil émetteur/récepteur,
**caractérisé en ce que** le débit du premier paquet de données est plus faible que la vitesse d'autorisation de transmission élevée, et **en ce que** les moyens sont en outre formés de manière à :
c) suspendre la transmission des autorisations de transmission au premier appareil émetteur/récepteur après la réception du premier paquet de données, et
c) envoyer après la suspension de la transmission et avant une nouvelle émission d'au moins deux autorisations de transmission vers le premier appareil émetteur/récepteur au moins deux autorisations de transmission au troisième appareil émetteur/récepteur, l'émission des autorisations de transmission vers le troisième appareil émetteur/récepteur étant suspendue, aussitôt qu'un second paquet de données a été reçu du troisième appareil émetteur/récepteur dans le deuxième appareil émetteur/récepteur.

5. Deuxième appareil émetteur/récepteur selon la revendication 4, **caractérisé en ce qu'**il est formé comme centrale pour un système à accès multiple qui est formée comme tête de réseau ou concentrateur d'un système HFR ou HFC, comme centrale d'un système HyperLan ou comme station de base d'un système LMDS ou UMTS et les premier et troisième appareils d'émission/réception sont formés respectivement comme modem câble et/ou station radio.
